# DEMANDE DE BREVET EUROPEEN

(11) **EP 3 663 827 A1**
(43) Date de publication de la demande: **10.06.2020**
(21) Numéro de dépôt: 18209752.7
(22) Date de dépôt: 03.12.2018
(51) Int. Cl.: G02B 7/00, B60K 35/00, B60K 37/02, G02F 1/1333, G03B 21/16, H04N 9/31, G02B 27/01

(54) **AFFICHEUR TÊTE HAUTE**

(71) Demandeur: Valeo Comfort and Driving Assistance, 94046 Créteil Cedex (FR)
(72) Inventeur: BEN-NACHOUANE, Ayoub, 94046 Créteil CEDEX (FR); SAUZAY, Laurent, 94046 Créteil (FR); BLANC, Eric, 94046 Créteil CEDEX (FR); LE TOUMELIN, Loic, 74321 Bietigheim-Bissingen (DE); LE-GUYADER, Delphine, 94046 Créteil CEDEX (FR); DELPIERRE, Laurent, 94046 Créteil (FR)
(74) Mandataire: Delplanque, Arnaud

(57) **Abrégé**

L'invention concerne un afficheur tête haute comprenant un dissipateur thermique pour refroidir un dispositif de génération d'image éventuellement soumis au rayonnement solaire.

Un afficheur (2) selon l'invention comprend un boîtier comprenant un écran (6) et une source de lumière (8). L'écran (6) comporte un cadre (18) entourant une matrice (16) destinée à former un faisceau lumineux.

Le boîtier (4) comprend une paroi (38A ; 38B) distante du dispositif de génération d'image (5) et comportant au moins une ouverture (36A ; 36B). Le dissipateur thermique (26) comprend une base (28) superposée au cadre de l'écran (6), la base (28) servant de support à au moins une languette (32A ; 32B) obturant partiellement l'ouverture (36A ; 36B) précitée.

Par l'intermédiaire de la languette (32A ; 32B) et de l'ouverture (36A ; 36B), le dissipateur thermique (26) permet une évacuation plus efficace de la chaleur émise par l'écran (6) à l'extérieur du boîtier (4).

## Description

### DOMAINE TECHNIQUE AUQUEL SE RAPPORTE L'INVENTION

La présente invention concerne un afficheur tête haute, par exemple pour véhicule automobile.

### ARRIÈRE-PLAN TECHNOLOGIQUE

Pour le conducteur d'un véhicule automobile, il est confortable de visualiser des informations relatives au fonctionnement du véhicule et/ou à l'état du trafic, sans avoir pour cela à détourner son regard de la chaussée.

Il est connu pour cela l'utilisation d'un afficheur tête haute comprenant un boîtier renfermant un dispositif de génération d'image comprenant un écran et une source de lumière. L'écran comporte une matrice à cristaux liquides dont la transmittance varie de façon contrôlée dans le temps. La source de lumière est agencée de manière à rétroéclairer l'écran et ainsi former le faisceau lumineux susmentionné, qui se propagea ainsi au-delà dudit écran.

Ce faisceau lumineux peut alors être projeté, éventuellement par l'intermédiaire d'un système optique, sur une lame partiellement transparente située dans le champ de vision du conducteur.

Pour ne pas encombrer l'espace situé au-dessus de la planche de bord du véhicule automobile, le pare-brise peut être utilisé en tant que lame partiellement transparente. En variante, on peut utiliser un combineur dédié, situé entre le conducteur et le pare-brise, en tant que lame partiellement transparente.

Afin d'offrir un confort visuel accru au conducteur, il est préférable que l'information soit perçue dans le champ de vision du conducteur comme étant éloignée. Pour cela, il est nécessaire d'utiliser un système optique avec un facteur d'agrandissement plus important et de ce fait plus encombrant. Le boîtier a donc été élargi pour permettre l'intégration de tel système optique, notamment au niveau de l'ouverture par laquelle l'image optique est projetée sur la lame partiellement transparente.

L'agrandissement du boîtier au niveau de sa sortie, présente l'inconvénient qu'une plus grande quantité de lumière ambiante pénètre dans le boîtier. Pour certains angles critiques d'ensoleillement, la contrainte d'exposition au rayonnement solaire devient plus problématique. Le système optique focalise la lumière du soleil sur l'écran de l'afficheur, engendrant un échauffement important de ce dernier et, par la même occasion, du conduit optique.

Les afficheurs tête haute, en particulier ceux utilisant le pare-brise comme lame partiellement transparente, sont donc soumis simultanément à deux contraintes thermiques générées d'une part par l'ensoleillement naturel et d'autre part par la source de lumière présente dans le boîtier. Au-delà d'une température critique à l'intérieur du boîtier, le fonctionnement de l'écran se trouve altéré et l'image projetée sur la lame partiellement transparente devient alors moins visible ou plus visible.

Il est donc apparu le besoin de trouver un nouveau type de dissipateur thermique, permettant un refroidissement plus efficace de l'écran d'un afficheur tête haute, lorsqu'il est soumis aux contraintes thermiques mentionnées ci-dessus.

### OBJET DE L'INVENTION

Dans ce contexte, la présente invention propose un afficheur tête haute pour véhicule automobile, comprenant un dissipateur thermique et un boîtier renfermant un dispositif de génération d'image comprenant un écran et une source de lumière, l'écran comportant un cadre entourant une matrice constituée d'éléments dont la transmittance varie de façon contrôlée dans le temps, la source de lumière étant agencée de manière à éclairer une face avant de l'écran pour former un faisceau lumineux.

L'invention est remarquable en ce que le boîtier comprend une paroi distante du dispositif de génération d'image et comportant au moins une ouverture, le dissipateur thermique comprenant une base superposée au cadre de l'écran (en étant par exemple en contact avec le cadre de l'écran), la base servant de support à au moins une languette obturant partiellement ladite ouverture.

Le dissipateur thermique permet de dissiper la chaleur générée par l'écran. Selon l'invention, un dissipateur thermique comporte une base positionnée à proximité de l'écran afin d'absorber la chaleur qu'il génère. La chaleur emmagasinée par la base est dirigée jusqu'à l'extérieur du boîtier, par l'intermédiaire d'une languette s'étendant de la base jusqu'à une ouverture du boîtier optique. En d'autres termes, la languette permet de diriger une grande partie de la chaleur émise par l'écran jusqu'à une ouverture située à distance de l'écran.

Le dissipateur thermique selon l'invention permet ainsi un refroidissement plus efficace de l'écran en évacuant principalement la chaleur à l'extérieur du boîtier optique.

Selon un autre avantage, l'invention permet également une plus grande liberté d'agencement de l'écran par rapport à la position de l'ouverture sur le boîtier optique. Cela est particulièrement avantageux lorsque les contraintes d'intégration ne permettent pas la présence d'une ouverture à proximité immédiate de l'écran.

Selon une autre caractéristique de l'invention, la languette obture partiellement une ouverture du boîtier optique de manière à permettre le passage d'un flux d'air naturel entre l'intérieur et l'extérieur du boîtier. Ce flux d'air permet avantageusement de limiter l'élévation de température à l'intérieur de l'ensemble du boîtier optique.

Ainsi, la languette du dissipateur thermique et son positionnement dans une ouverture du boîtier optique, permettent un refroidissement plus efficace de l'intérieur du boîtier optique et en particulier au niveau de son écran.

D'autres caractéristiques non limitatives et avantageuses du dispositif conforme à l'invention sont les suivantes :
- Les bords en vis-à-vis, délimitant l'ouverture et la languette, sont écartés d'une distance (non-nulle) égale ou inférieure à 1,2 mm, de préférence comprise entre 1 mm et 0,6 mm ;
- le dissipateur thermique a une conductivité thermique supérieure à la conductivité thermique du cadre de l'écran ;
- le dissipateur thermique a une conductivité thermique supérieure à 50 W.m⁻¹.K⁻¹, de préférence comprise entre 200 W.m⁻¹.K⁻¹ et 260 W.m⁻¹.K⁻¹, de préférence de l'ordre de 230 W.m⁻¹.K⁻¹;
- le dissipateur thermique a une épaisseur supérieure à 1 mm, de préférence comprise entre 1,5 mm et 2,5 mm ;
- le boîtier optique est réalisé à partir de magnésium et/ou le dissipateur thermique est réalisé à partir d'aluminium ;
- la base du dissipateur thermique est placée en vis-à-vis d'une face arrière de l'écran, opposée à la face avant dudit écran ;
- la variation de l'écart, entre la base et le cadre de l'écran, est inférieure à 0,01 mm, de préférence comprise entre 0,009 mm et 0,005 mm, de préférence de l'ordre de 0,007 mm ;
- la base du dissipateur thermique comporte une lucarne en vis-à-vis de la matrice de l'écran ;
- le dissipateur thermique sert de support à une autre languette obturant partiellement un autre passage du boîtier optique ;
- une partie de la languette (par exemple une zone intermédiaire s'étendant entre la base et une partie distale obturant l'ouverture) s'étend à travers un espace libre défini entre le dispositif de génération d'image et le boîtier ;
- le dispositif de génération d'image comprend une plaque en céramique transparente interposée entre l'écran et la base du dissipateur thermique ;
- la plaque en céramique transparente est au contact d'une part de la matrice et d'autre part de la base, ce qui facilite encore l'évacuation de la chaleur générée par l'écran par le dissipateur thermique.

La présente demande concerne également un véhicule automobile comprenant un afficheur tête haute tel que décrit ci-dessus.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

### DESCRIPTION DES FIGURES

La description qui va suivre en regard des dessins annexés, donnés à titre d'exemples non limitatifs, fera bien comprendre en quoi consiste l'invention et comment elle peut être réalisée. Sur les dessins annexés :
- la figure 1 illustre une représentation schématique d'une coupe longitudinale d'un afficheur tête haute selon l'invention ;
- la figure 2 illustre une vue en perspective d'un dissipateur thermique contenu dans l'afficheur représenté par la figure 1 ;
- la figure 3 illustre une vue de face d'une paroi extérieure du boîtier optique représenté par la figure 1, comprenant une ouverture partiellement obturée par une extrémité distale du dissipateur thermique représenté par la figure 2 ;
- la figure 4 illustre une représentation schématique d'une variante de réalisation d'un afficheur représenté par la figure 1 ; et
- la figure 5 illustre une vue en éclatée d'une variante de réalisation d'un afficheur représenté par la figure 1.

### DESCRIPTION DÉTAILLÉE D'UN EXEMPLE DE RÉALISATION

Pour rappel, l'invention concerne un nouveau type de dissipateur thermique, permettant un refroidissement plus efficace d'un écran d'afficheur tête haute lorsqu'il est soumis à de fortes contraintes thermiques.

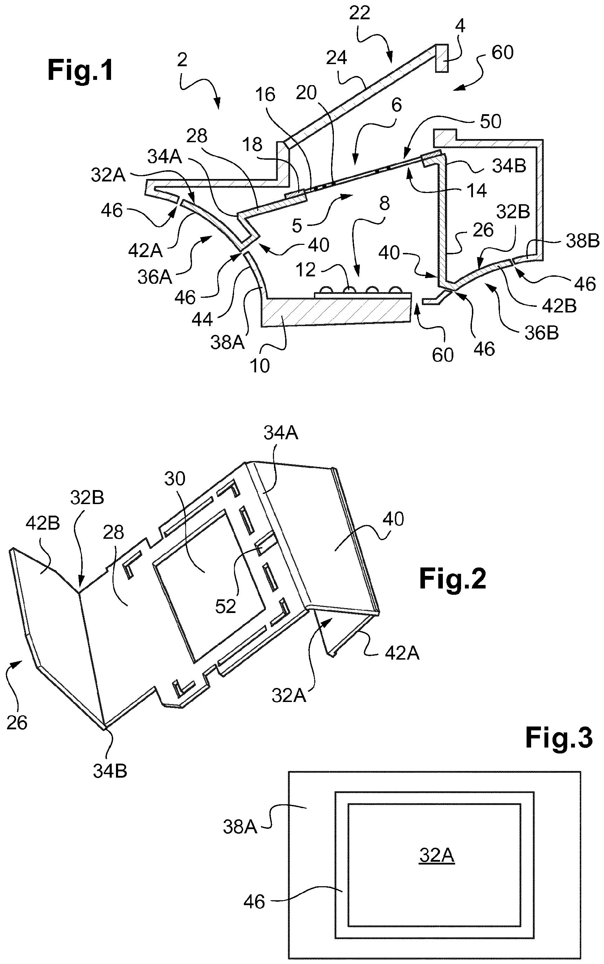

La figure 1 représente de façon schématique les composants principaux d'un afficheur 2 tête haute selon l'invention, apte à équiper un véhicule automobile.

L'afficheur 2 comporte un boîtier 4 qui renferme un dispositif de génération d'image 5 comprenant un écran 6 et une source de lumière 8. La source de lumière 8 est présente ici au niveau d'un fond 10 du boîtier 4. Selon le présent exemple, la source de lumière comprend une pluralité de diodes électroluminescentes 12 pilotées par une unité de commande non représentée. Les diodes électroluminescentes 12 sont orientées de sorte que leurs faisceaux lumineux éclairent une face avant 14 de l'écran 6. De préférence, les faisceaux lumineux rétroéclairent majoritairement une matrice 16 entourée par un cadre 18 de l'écran. La matrice 16 est un écran à cristaux liquides comprenant une pluralité d'éléments 20 dont la transmittance varie de façon contrôlée au cours du temps (ainsi qu'un polariseur d'entrée formant la face avant 14 de l'écran 6 et un polariseur de sortie formant la face arrière 50 de l'écran 6). La valeur de la transmittance de chaque élément 20 est pilotée par l'unité de commande mentionnée ci-dessus.

Le boîtier 4 peut également comporter un système optique (non représenté), tel qu'un miroir de renvoi, permettant de modifier les propriétés du faisceau lumineux émis par l'écran 6 et transmis (par le système optique) vers une lame partiellement transparente (par exemple le pare-brise du véhicule ou, en variante, un combineur dédié) de manière à former une image virtuelle visible par le conducteur.

Comme mentionné ci-dessus, afin d'offrir un confort visuel accru au conducteur d'un véhicule automobile, on souhaite que l'information soit perçue par le conducteur comme étant distante dans son champ de vision. Pour cela, il est nécessaire d'utiliser un système optique avec un facteur d'agrandissement plus important et donc plus encombrant. Le boîtier 4 est donc élargi pour permettre leur intégration, notamment au niveau d'une ouverture d'émission 22, protégée par une vitre 24, par laquelle le faisceau lumineux émis en sortie de l'écran 6 est projeté sur la lame partiellement transparente (ici le pare-brise). Pour certaines heures d'ensoleillement, la quantité de lumière naturelle éclairant l'écran 6 entraine un échauffement important de la matrice 16, susceptible d'endommager cette dernière. Pour éviter cela, l'invention propose un nouveau type d'afficheur tête haute 2, se distinguant de l'état de la technique en ce qu'il comprend un dissipateur thermique 26 d'un nouveau genre.

Les figures 1 à 3 représentent un premier mode de réalisation d'un dissipateur thermique 26 selon l'invention. Le dissipateur thermique 26 comprend une base 28 superposée à une partie de l'écran 6, ici à une partie de la face avant 14 de l'écran 6. De préférence, la base 28 recouvre la totalité de la face du cadre 18 délimitant les contours de la face avant 16 de l'écran. Comme illustré par la figure 2, la base 28 comporte une lucarne 30 centrée sur la matrice 16. Les dimensions de la lucarne 30 sont similaires (ou, ici, légèrement supérieures) à celles de la matrice 16. En d'autres termes, les dimensions de la lucarne 30 sont choisies pour permettre le passage d'au moins une partie du faisceau lumineux traversant l'écran 6 (ici du faisceau lumineux amont généré par la source de lumière 8).

Dans l'exemple décrit, les dimensions de la lucarne 30 étant supérieures à celles de la matrice 16, la lucarne 30 permet le passage de l'intégralité du faisceau lumineux. On peut toutefois prévoir en variante que les dimensions de la lucarne soient inférieures à celles de la matrice 16, ce qui permet d'augmenter la surface de contact entre le dissipateur thermique 26 et l'écran 6 ; dans un tel cas, la lucarne ne laisse passer l'intégralité du faisceau lumineux, mais seulement une partie (en pratique substantielle) de celui-ci.

Le dissipateur thermique 26 comporte deux languettes 32A et 32B, s'étendant à partir de la base 28. Il est à noter que l'invention n'est pas limitée à un nombre particulier de languettes. Par exemple, la base peut comprendre un nombre de languettes compris entre 1 et 6. Les languettes 32A et 32B et la base 28 forment ici une seule et même pièce. Selon une variante de réalisation non représentée, les languettes peuvent être des pièces distinctes et maintenues à la base par l'intermédiaire de moyens connus.

Comme illustré par les figures 2 et 3, une première languette 32A s'étend à partir d'un bord 34A de la base, jusqu'à une ouverture 36A traversant une paroi 38A du boîtier 4. Une deuxième languette 32B s'étend à partir d'un bord 34B opposé de la base, jusqu'à une ouverture 36B traversant une autre paroi 38B du boîtier 4. Chacune des parois 38A, 38B est distante du dispositif de génération d'image 5, c'est-à-dire que la paroi concernée s'étend en tout point à distance du dispositif de génération d'image 5.

Chaque languette 32A ; 32B comporte des zones intermédiaires (ici des zones d'inflexion) 40 pour permettre à leur partie distale 42A ; 42B d'être située au niveau d'une ouverture 36A ; 36B et d'obturer partiellement cette ouverture 36A ; 36B. Plus précisément, la partie distale 42A ; 42B de chaque languette 32A ; 23B est agencée de sorte à affleurer ou sensiblement affleurer la surface externe 44 du boîtier 4. Les contours des ouvertures 36A, 36B et les contours des parties distales 42A, 42B sont ainsi de formes complémentaires.

Chacune des parois 38A, 38B étant distante du dispositif de génération d'image 5, les zones intermédiaires 40 des languettes 32A, 23B s'étendent chacune dans l'espace libre situé entre le dispositif de génération d'image 5 et le boîtier 4 (c'est-à-dire à travers l'espace libre situé dans le boîtier 4 et entourant le dispositif de génération d'image 5), ce qui facilite la dissipation de chaleur.

L'utilisation de zones d'inflexion 40 en tant que zones intermédiaires (zones d'inflexion ayant en section des formes non rectilignes) permet de loger au sein du boîtier 4 un dissipateur thermique 26 ayant une longueur (selon cette section), et donc une masse, plus importante et donc d'améliorer le transfert thermique par conduction et par convection.

Comme déjà indiqué, la base 28, la zone intermédiaire 40 et la partie distale 42A est ici réalisé d'une pièce (par exemple en métal).

Il est à noter que les dimensions des parties distales 42A, 42B sont ici légèrement inférieures aux dimensions de chaque ouverture 36A ; 36B, de sorte à permettre l'existence d'un interstice 46 entre les bords délimitant chaque ouverture 36A ; 36B et les bords délimitant la partie distale correspondante 42A ; 42B des languettes 32A ; 32B. On prévoit ainsi que les bords délimitant une ouverture 36A ; 36B et les bords délimitant le contour d'une languette 32A ; 32B obturant ladite ouverture 36A ; 36B, soient écartées d'une distance permettant la circulation d'un flux d'air naturel, mais empêchant ou limitant l'introduction de solide ou de liquide dans le boîtier 4 selon la norme IP42. De préférence, la valeur de cette distance est égale ou inférieure à 1,2 mm, de préférence comprise entre 1 mm et 0,6 mm. Selon le présent exemple, cette distance est égale à 0,8 mm.

En variante, un isolant thermique pourrait être interposé entre les bords de la partie distale 42A ; 42B d'au moins une languette 32A ; 32B et les bords de l'ouverture 36A ; 36B correspondante de manière à assurer l'étanchéité du boîtier 4 tout en évitant (ou du moins en limitant) le transfert thermique entre la languette 32A ; 32B concernée et le boîtier 4.

De façon avantageuse, chaque languette 32A ; 32B permet de diriger ou de canaliser une grande partie de la chaleur émise par l'écran 6 et transmise à la base 28, jusqu'à une ouverture 36A, 36B située plus ou moins à distance de l'écran 6. De ce fait, l'écran 6 peut être positionné de façon plus libre dans le boîtier 4, indépendamment de la position des ouvertures 36A et 36B. Ainsi, l'invention permet une plus grande liberté de formes et de dimensions du boîtier 4 tout en permettant un meilleur refroidissement de l'écran 6 grâce au dissipateur thermique 26. Cela est particulièrement avantageux lorsque la forme du boîtier est fortement évasée en aval de l'écran. La présence d'un interstice 46 entre la languette et les bords de l'ouverture 36 permet avantageusement l'établissement d'un flux d'air naturel entre l'intérieur et l'extérieur du boîtier 4, pour refroidir l'ensemble des éléments contenus dans ledit boîtier. Ce flux d'air permet ainsi de limiter l'élévation de température à l'intérieur du boîtier 4 afin de préserver l'intégrité des composants électroniques constituant l'afficheur 2.

Des possibilités de réalisation de certains aspects de l'afficheur tête haute 2 sont présentées ci-après ; ces différentes possibilités peuvent être combinées entre elles pour obtenir d'autres modes de réalisation non explicitement décrits.

Selon une possibilité de réalisation, le dissipateur thermique 26 a une conductivité thermique supérieure à 50 W.m⁻¹.K⁻¹, de préférence comprise entre 200 W.m⁻¹.K⁻¹ et 260 W.m⁻¹.K⁻¹. Selon le présent exemple, elle est de l'ordre de 230 W.m⁻¹.K⁻¹.

Par ailleurs, afin de permettre au dissipateur thermique 26 d'avoir une rigidité mécanique suffisante pour éviter sa mise en vibration et l'émission de bruit lors du déplacement du véhicule, le dissipateur thermique a une épaisseur supérieure à 1 mm, de préférence comprise entre 1,5 mm et 2,5 mm. Selon le présent exemple, elle est de l'ordre de 2 mm.

La masse volumique du dissipateur thermique 26 peut être comprise entre 2 500 kg.m⁻¹ et 3 000 kg.m⁻¹. Selon le présent exemple, elle est de l'ordre de 2 700 kg.m⁻¹.

L'émissivité du dissipateur thermique 26 peut être comprise entre 0,5 et 0,9, de préférence entre 0,7 et 0,8. Selon le présent exemple, elle est de l'ordre de 0,77.

Le dissipateur thermique 26 est de préférence réalisé à partir d'un matériau métallique, comme par exemple de l'aluminium anodisé, de l'acier, du cuivre ou du magnésium.

Selon une possibilité de réalisation, afin de favoriser une transmission efficace de la chaleur entre le cadre 18 de l'écran et la base 28, la base présente une face plate en vis-à-vis de l'écran 6, dont la platitude est comprise entre 0,005 mm.mm⁻¹ et 0,01 mm.mm⁻¹. Selon le présent exemple, elle est de l'ordre de 0,007 mm.mm⁻¹. Bien entendu, la base 28 peut également présenter une face de forme complémentaire au cadre 18, lorsque le cadre comporte des zones concaves et/ou convexes. Dans ce cas, on veillera à ce que la variation de la distance ente la base et le cadre soit comprise dans les plages de valeurs mentionnées ci-dessus.

Selon une variante de réalisation, une pâte thermique peut être interposée entre la base 28 et le cadre 18, afin d'assurer un meilleur transfert de chaleur entre ces éléments. De préférence, la pâte thermique a une conductivité thermique égale ou supérieure à 3 W.m⁻¹.K⁻¹. L'épaisseur de la pâte peut être comprise entre 20 µm et 70 µm, de préférence de l'ordre de 50 µm.

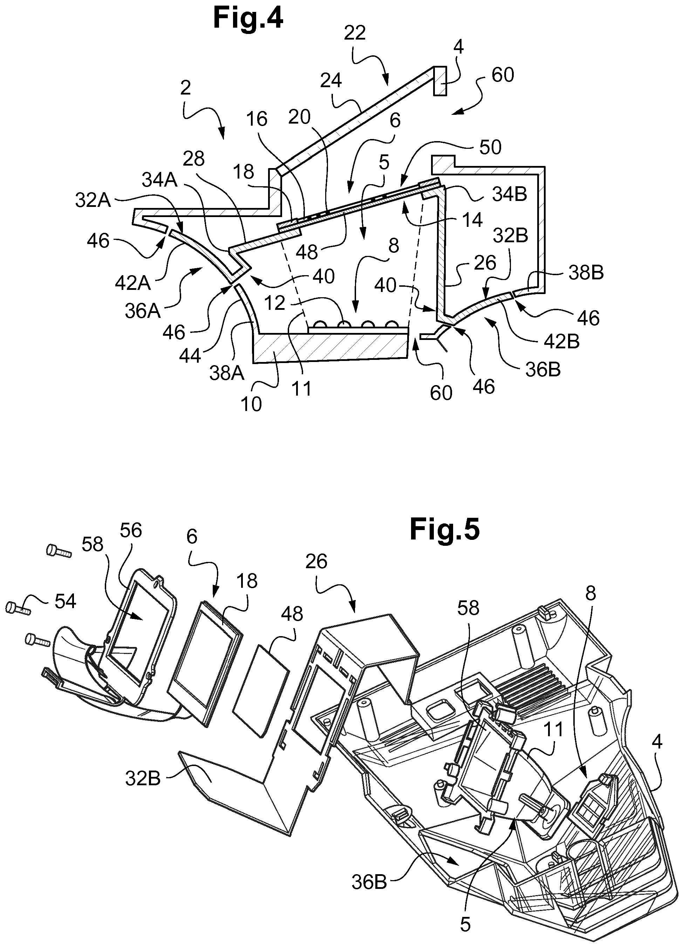

Selon une autre possibilité de réalisation illustrée par la figure 4, une plaque translucide 48 est interposée entre la base 28 du dissipateur thermique 26 et l'écran 6. Cette plaque translucide 48 est au contact du dissipateur thermique 26, par exemple au niveau des bords de la lucarne 30 formée dans le dissipateur thermique 26 comme expliqué plus bas, ici sur tout le pourtour de cette lucarne 30 (sur une largeur d'au moins 2 mm sur tout le pourtour de la lucarne 30).

La plaque translucide 48 est par ailleurs au contact de l'écran 6, précisément de la matrice 16 de l'écran 6. La plaque translucide 48 peut couvrir toute la surface de la matrice 16 ou seulement une partie de celle-ci.

Cette plaque 48 peut comprendre un film polarisant, composé par exemple de polymère, apte à absorber plus de 90% d'une polarité définie. Ce film polarisant peut alors laisser passer la lumière polarisée selon la direction du polariseur d'entrée de la matrice 16 et réfléchir vers la source de lumière 8 la lumière polarisée à 90° par rapport à cette direction. Ce mode de réalisation permet avantageusement, lorsqu'un réflecteur 11 est interposé entre la source de lumière 8 et l'écran 6 (comme représenté schématiquement sur la figure 4 et visible sur la figure 5), de recycler la lumière polarisée à 90° vers le réflecteur 11 et d'atteindre ainsi des niveaux de luminosité de la matrice 16 qui sont plus importants, de l'ordre de 15 000 cd/m² jusqu'à 50°C, pour un niveau de courant d'alimentation donné des diodes électroluminescentes 12.

Cette plaque 48 peut également comprendre une plaque en céramique transparente. Une telle plaque en céramique peut également comporter une languette obturant (au moins partiellement) une autre ouverture du boîtier 4. La céramique transparente utilisée est par exemple un oxyde d'aluminium (tel que AION, MgAl2O4, Al2O3 ou Y3Al5O12). Une telle céramique a une conductivité thermique supérieure à 5 W.m⁻¹.K⁻¹, typiquement comprise entre 5 W.m⁻¹.K⁻¹ et 45 W.m⁻¹.K⁻¹. La céramique étant un bon conducteur thermique, l'utilisation d'une plaque en céramique au contact de l'écran 6 et du dissipateur thermique 26 permet de faciliter encore l'évacuation de la chaleur (en particulier celle générée par l'écran 6) par le dissipateur thermique 26.

Selon une possibilité de mise en oeuvre, la plaque translucide 48 comporte une telle plaque en céramique et le film polarisant mentionné ci-dessus.

Selon une possibilité de réalisation, le dissipateur thermique 26 est monté (par des moyens de maintien) sur l'écran 6 et/ou sur le boîtier 4. Les moyens de maintien peuvent être des vis 54, de la colle ou autres. Comme illustré par la figure 5, la base 28 du dissipateur thermique peut comporter des passages 52 permettant le passage de vis 54 de fixation. Selon un mode de réalisation préféré illustré par la figure 5, une plaque 56 peut être superposée à la base 28 et être fixée sur le cadre 18 de l'écran 6, de sorte que la base 28 soit prise en étau entre la plaque 56 et le cadre 18. Bien entendu, la plaque 56 comporte une lucarne 58 de sorte à ne pas gêner la transmission du faisceau lumineux émis par l'écran 6. Il est à noter que les vis de fixation 54 sont vissées dans un conduit optique 58 présent entre la source de lumière 8 et l'écran 6. Ce mode de réalisation permet avantageusement de ne pas utiliser d'autres moyens pour maintenir fixe le dissipateur thermique 26 par rapport au boîtier 4.

Comme déjà indiqué, dans le mode de réalisation de la figure 5, le dispositif de génération d'image 5 comprend la source de lumière 8, le réflecteur 11 et l'écran 6.

Selon une possibilité de réalisation, le dissipateur thermique 26 peut comporter des ailettes s'étendant à l'extérieur du boîtier 4. Les ailettes sont par exemple présentes au niveau des parties distales 42A, 42B du dissipateur thermique 26.

Selon une possibilité de réalisation, l'afficheur 2 comporte des moyens mécaniques permettant d'établir un flux d'air forcé au niveau de la partie de la languette obturant une ouverture du boîtier. Selon un autre mode de réalisation, l'afficheur 2 comporte un dispositif de refroidissement mettant en oeuvre un effet thermoélectrique de type effet Peltier, au niveau de la partie de la languette obturant une ouverture du boîtier.

Selon une autre possibilité de réalisation, le boîtier 4 est réalisé à partir d'un matériau métallique, selon le présent exemple à base de magnésium. Le boîtier 4 comporte également des fentes 60 pour permettre une plus grande circulation d'air, notamment au niveau de l'écran 6 et de la source de lumière 8. Les fentes ont une largeur égale ou inférieure à 1 mm afin de respecter la norme IP42. De préférence, les fentes sont positionnées en aval de l'écran 6. Les termes « amont » et « aval » se réfèrent au sens de propagation des faisceaux lumineux émis par la source de lumière 8.

## Revendications

1. Afficheur (2) tête haute comprenant un dissipateur thermique (26) et un boîtier (4) renfermant un dispositif de génération d'image (5) comprenant un écran (6) et une source de lumière (8), l'écran (6) comportant un cadre (18) entourant une matrice (16) constituée d'éléments (20) dont la transmittance varie de façon contrôlée dans le temps, la source de lumière (8) étant agencée de manière à éclairer une face avant (14) de l'écran (6) pour former un faisceau lumineux, **caractérisé en ce que** le boîtier (4) comprend une paroi (38A ; 38B) distante du dispositif de génération d'image (5) et comportant au moins une ouverture (36A ; 36B), le dissipateur thermique (26) comprenant une base (28) superposée au cadre de l'écran (6), la base (28) servant de support à au moins une languette (32A ; 32B) obturant partiellement ladite ouverture (36A ; 36B).

2. Afficheur (2) selon la revendication précédente, **caractérisé en ce que** les bords en vis-à-vis, délimitant l'ouverture (36A ; 36B) et la languette (32A ; 32B), sont écartés d'une distance égale ou inférieure à 1,2 mm.

3. Afficheur (2) selon l'une des revendications précédentes, **caractérisé en ce que** le dissipateur thermique (26) a une conductivité thermique supérieure à la conductivité thermique du cadre de l'écran (6).

4. Afficheur (2) selon l'une des revendications précédentes, **caractérisé en ce que** le dissipateur thermique (26) a une conductivité thermique supérieure à 50 W.m⁻¹.K⁻¹.

5. Afficheur (2) selon l'une des revendications précédentes, **caractérisé en ce que** le dissipateur thermique (26) a une épaisseur supérieure à 1 mm.

6. Afficheur (2) selon l'une des revendications précédentes, **caractérisé en ce que** le dissipateur thermique (26) est réalisé à partir d'aluminium.

7. Afficheur (2) selon l'une des revendications précédentes, **caractérisé en ce que** le boîtier optique (4) est réalisé à partir de magnésium.

8. Afficheur (2) selon l'une des revendications précédentes, **caractérisé en ce que** la base (28) du dissipateur thermique (26) est placée en vis-à-vis de la face avant (14) de l'écran (6).

9. Afficheur (2) selon l'une des revendications précédentes, **caractérisé en ce que** la variation de l'écart, entre la base (28) et le cadre de l'écran (6), est inférieure à 0,01 mm.

10. Afficheur (2) selon la revendication 8 ou 9, **caractérisé en ce que** la base (28) du dissipateur thermique (26) comporte une lucarne (30) en vis-à-vis de la matrice de l'écran (6).

11. Afficheur (2) selon l'une des revendications précédentes, **caractérisé en ce que** le dissipateur thermique (26) sert de support à une autre languette (32B) obturant partiellement une autre ouverture (36B) du boîtier optique (4).

12. Afficheur (2) selon l'une des revendications précédentes, **caractérisé en ce que** une partie (40) de la languette (32A ; 32B) s'étend à travers un espace libre défini entre le dispositif de génération d'image (5) et le boîtier (4).

13. Afficheur (2) selon l'une des revendications précédentes, **caractérisé en ce que** le dispositif de génération d'image (5) comprend une plaque (48) en céramique transparente interposée entre l'écran (6) et la base (28) du dissipateur thermique (26).

14. Afficheur (2) selon la revendication précédente, **caractérisé en ce que** la plaque (48) en céramique transparente est au contact d'une part de la matrice (16) et d'autre part de la base (28).
